# EUROPÄISCHE PATENTSCHRIFT

(11) **EP 2 598 769 B1**
(45) Veröffentlichungstag und Bekanntmachung des Hinweises auf die Patenterteilung: **02.09.2015**
(21) Anmeldenummer: 11748544.1
(22) Anmeldetag: 21.07.2011
(51) Int. Cl.: F16F 7/02, F16F 7/08, F16D 7/02, F16D 3/14, F16F 15/12, F16C 3/02

(54) **EINRICHTUNG ZUR DÄMPFUNG VON SCHWINGUNGEN IN EINEM ANTRIEBSSTRANG**
DEVICE FOR DAMPING VIBRATIONS IN A DRIVE TRAIN
DISPOSITIF POUR L'AMORTISSEMENT DE VIBRATIONS DANS UNE CHAÎNE CINÉMATIQUE

(30) Priorität: 29.07.2010 AT 12712010
(43) Veröffentlichungstag der Anmeldung: 05.06.2013
(73) Patentinhaber: Andritz AG, 8045 Graz (AT)
(72) Erfinder: EICHINGER, Roman, A-1100 Wien (AT)
(74) Vertreter: Schweinzer, Friedrich
(86) Internationale Anmeldenummer: PCT/AT2011/000310
(87) Internationale Veröffentlichungsnummer: WO 2012/012816

(56) Entgegenhaltungen:
- EP-A1- 0 567 351
- FR-A1- 2 624 225
- GB-A- 1 546 342
- US-A- 1 716 284
- US-A1- 2007 240 959

## Beschreibung

Die Erfindung betrifft eine Einrichtung zum Dämpfen von Schwingungen in einem Antriebsstrang.

Zum Dämpfen von Schwingungen bei Antriebssträngen gibt es mehrere unterschiedliche Arten von Schwingungsdämpfern. Viskose (z.B. geschwindigkeitsproportionale, hydraulische) Dämpfer pumpen Flüssigkeiten von einer Kammer über einen Strömungswiderstand in eine andere Kammer. Um dies zu ermöglichen muss die Handhabung des eingesetzten Öls samt Abdichtungsproblematik berücksichtigt werden. Eine Alternative zu hydraulischen Dämpfern sind Reibdämpfer, wie in Dokument FR-A-2 624 225 offenbart, Vorteil eines (Coulomb'schen) Reibdämpfers ist der Aufbau aus Werkstoffen mit linearen Materialeigenschaften, die sich über die Lebensdauer nicht verändern. Dadurch lässt sich das dynamische Verhalten des Dämpfers mit geeigneten Simulationsprogrammen sehr gut vorhersagen. Die verbauten Teile können in herkömmlicher Weise spanend bearbeitet werden.

Ziel der Erfindung ist es die Gefahr von Vibrationen bei Antriebssträngen zu eliminieren.

Die Erfindung ist daher dadurch gekennzeichnet, dass eine zylindrische Welle, vorzugsweise als Hohlwelle ausgebildet, vorgesehen ist um die mindestens ein Ring mit Reibflächen angeordnet ist. Als Ring werden in diesem Zusammenhang auch ringförmig angeordnete Reibelemente angesehen, wobei sich hier die Reibelemente über einen Großteil des Kreisumfanges erstrecken. Der Ring mit Reibflächen wirkt hier als Dämpferelement, während die Welle, vorzugsweise Hohlwelle, als Federelement für die Rückstellung in die Ausgangslage zuständig ist.

Eine vorteilhafte Weiterbildung der Erfindung ist dadurch gekennzeichnet, dass die Reibflächen radial außen an mindestens einem Ring angeordnet sind. Eine günstige Ausgestaltung der Erfindung ist dadurch gekennzeichnet, dass um den mindestens einen Ring ein Hohlzylinder angeordnet ist, wobei der Hohlzylinder geteilt sein kann. Wird um den mindestens einen Ring ein Hohlzylinder angeordnet, kann in günstiger Weise die Gegenfläche der Reibfläche am inneren Umfang des Hohlzylinders vorgesehen werden, wobei der Hohlzylinder auch die (Hohl-) Welle vor Verschmutzungen schützt.

Eine günstige Weiterbildung der Erfindung ist dadurch gekennzeichnet, dass der Hohlzylinder oder ein Teilzylinder davon Schlitze aufweist, die sich axial erstrecken und um den Zylinderumfang angeordnet sind, wobei ein tangential vorgespanntes Spannband oder mehrere um den Umfang tangential angeordnete vorgespannte Zugstangen zur Aufbringung des Dämpfermomentes vorgesehen sein können. Durch die Schlitze lässt sich das Reibmoment gut einstellen, wobei das Dämpfermoment in einfacher Weise über ein Spannband aufgebracht werden kann. Mehrere tangential angeordnete Zugstangen haben den Vorteil, dass die erforderliche Kraft gut auf die einzelnen Elemente aufgeteilt werden kann.

Eine alternative Ausgestaltung der Erfindung ist dadurch gekennzeichnet, dass mehrere Ringe vorgesehen sind, die an den axialen Stirnseiten Reibflächen aufweisen, wobei die Ringe den Hohlzylinder bilden können. Durch diese Anordnung lässt sich die bei der Dämpfung entstehende Energie besonders gut aufteilen. Die Elemente lassen sich auch besonders einfach montieren bzw. auch einzelne Elemente einfach ersetzen.

Eine günstige Weiterbildung der Erfindung ist dadurch gekennzeichnet, dass mehrere axial vorgespannte Zugstangen zur Aufbringung des Dämpfermomentes vorgesehen sind. Durch die Anordnung der Zugstangen kann die aufzubringende Kraft gut verteilt werden.

Die Erfindung wird nun anhand der Zeichnungen beispielhaft beschrieben, wobei
Fig. 1 eine isometrische Ansicht einer Variante der Erfindung
Fig. 2 einen Schnitt durch die erste Variante der Erfindung
Fig. 3 eine isometrische Ansicht einer Zweiten Variante der Erfindung
Fig. 4 einen Schnitt durch eine zweiten Variante der Erfindung
Fig. 5 einen Schnitt durch eine weitere Variante der Erfindung darstellt.

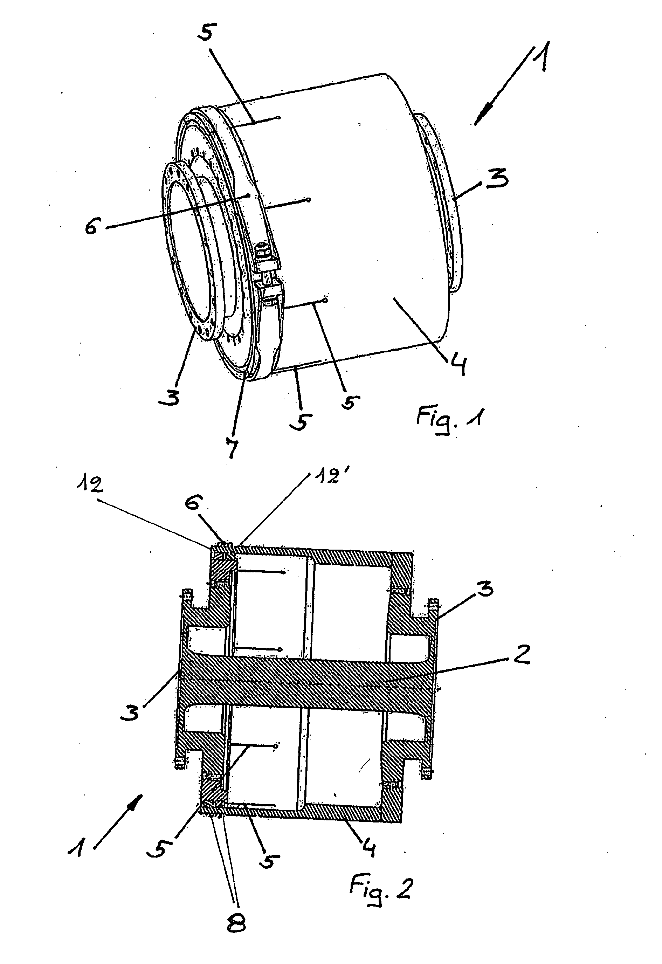

Fig. 1 zeigt eine isometrische Ansicht einer ersten Variante eines Drehschwingungsdämpfers 1 gemäß der Erfindung. Dieser Drehschwingungsdämpfer 1 besteht aus einer Welle 2 mit Flanschen 3, die das gesamte Drehmoment vom Getriebe (nicht dargestellt) auf die Lagerwelle (nicht dargestellt) überträgt. Diese Welle 2 mit den Flanschen 3 dient als Drehfederelement des Drehschwingungsdämpfers 1. An einem Flansch wird ein Rohr (Hohlzylinder) 4 befestigt, das über den anderen Flansch 3 hinausreicht. Das Rohr 4 weist Schlitze 5 auf, die sich axial erstrecken und um den Zylinderumfang angeordnet sind. Zur Einstellung des Reibrnomentes dient ein Spannband 6, das über eine Schraube 7 zusammengehalten und tangential vorgespannt wird.

Fig. 2 zeigt den erfindungsgemäßen Drehschwingungsdämpfer 1 im Schnitt. Hier wurde die Welle 2 als Vollwelle dargestellt, sie kann aber auch vorteilhafterweise als Hohlwelle ausgebildet sein, wobei hierdurch Gewicht gespart werden kann. Es ist auch gut die Form der Flansche 3 zu erkennen, die mit der Welle 2 fest verbunden sind. Die Flansche 3 werden jeweils mit einer Hälfte einer Kupplung fest verbunden. An einem der Flansche 3 ist ein Rohr (Hohlzylinder) 4 befestigt, am anderen werden in Umfangsrichtung (tangential) Ringe 8 mit radial außen angeordneten Reibflächen (12, 12') befestigt, wobei hier zwei nebeneinander angeordnete Ringe 8 dargestellt sind.

Die Ringe 8 können auch durch eine Anzahl von als Reibelemente dienenden ringförmig angeordneten Gleitleisten bestehen. Je nach Belastung können aber auch nur ein Ring 8 oder mehrere Ringe 8 eingesetzt werden. Das Rohr 4 umschließt hier die Ringe 8. Wirkt am Flansch 3 ein Torsionsmoment, so wird die Drehfeder (Welle 2) gedehnt. Ist die Dehnung groß genug, dass die Haftgrenze zwischen Rohr 4 und Ringen 8 überschritten wird, so wird durch die Reibung Energie dissipiert.

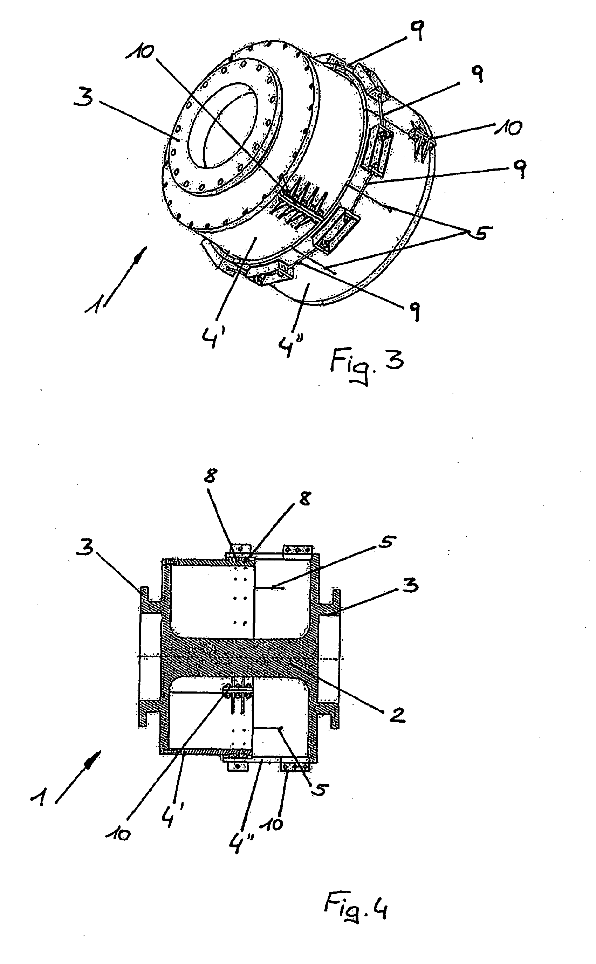

Fig. 3 und Fig. 4 zeigen eine zweite Variante eines erfindungsgemäßen Drehschwingungsdämpfers, wobei Fig. 1 eine isometrische Ansicht und Fig. 2 einen Schnitt darstellen. Auch hier sind Flansche 3 mit einer Welle 2, die als Hohlwelle ausgeführt sein kann, fest verbunden. Das Rohr 4 ist hier zweigeteilt ausgeführt und besteht aus einem inneren Rohr 4' und einem äußeren Rohr 4", die ineinander gesteckt sind und einen Presssitz aufweisen. Das äußere Rohr 4" weist hier Schlitze 5 auf. Um das Reibmoment einstellen zu können sind hier tangentiale Zugstangen 9 um den Umfang angeordnet.

Die Funktion des Drehschwingungsdämpfers 1 kann der Fig. 4 entnommen werden. Das innere Rohr 4' hat einen kleineren Durchmesser und ist an seinem Ende mit Ringen 8 versehen, wobei hier zwei Ringe 8 dargestellt sind, aber auch nur ein Ring 8 oder mehrere Ringe 8 eingesetzt werden können. Zur günstigeren Fertigung sind hier die Rohre 4' und 4" als Halbschalen gefertigt und mittels Schrauben 10 fest miteinander verbunden.

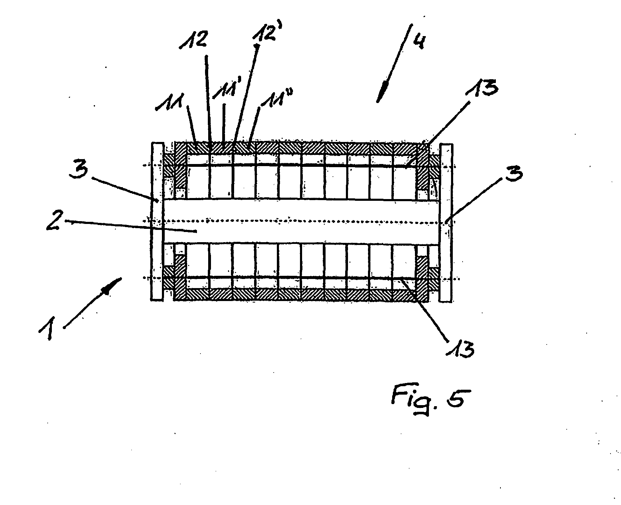

Fig. 5 zeigt eine weitere Variante der Erfindung. Der Drehschwingungsdämpfer 1 besteht ebenfalls aus einer Welle 2, die als Hohlwelle ausgeführt sein kann, und an ihren Enden mit Flanschen 3 versehen ist. Die Welle 2 wirkt hier wieder als Drehfeder. Das Rohr 4 wird hier durch Ringe 11, 11', 11" etc. gebildet, zwischen denen Reibflächen 12, 12' etc. vorgesehen sind. Der Aufbau mit Ringen 11 bringt Redundanz. Sollte ein Reibpaar stecken bleiben, so gibt es noch weitere die die Funktion des Dämpfers erfüllen.

Der erfindungsgemäße Drehschwingungsdämpfer kann überall dort eingesetzt werden, wo genügend Raum in axialer Länge bei einem Antriebsstrang vorhanden ist bzw. benötigt wird.

## Patentansprüche

1. Einrichtung zum Dämpfen von Schwingungen in einem Antriebsstrang, **dadurch gekennzeichnet, dass** eine zylindrische Welle (2), vorzugsweise als Hohlwelle mit Flanschen (3) ausgebildet, vorgesehen ist, die zwischen den Hälften einer Kupplung angeordnet und mit diesen fest verbunden ist und um die mindestens ein Ring (8, 11, 11', 11") mit Reibflächen angeordnet ist.

2. Einrichtung nach Anspruch 1, **dadurch gekennzeichnet, dass** die Reibflächen (12, 12') radial außen am mindestens einen Ring (8) angeordnet sind.

3. Einrichtung nach Anspruch 1 oder 2, **dadurch gekennzeichnet, dass** um den mindestens einen Ring (8) ein Hohlzylinder (4, 4', 4") angeordnet ist, der an einem der Flanschen (3) befestigt ist.

4. Einrichtung nach Anspruch 3, **dadurch gekennzeichnet, dass** der Hohlzylinder (4, 4', 4") geteilt ist.

5. Einrichtung nach Anspruch 3 oder 4, **dadurch gekennzeichnet, dass** der Hohlzylinder (4) oder ein Teilzylinder (4', 4") davon Schlitze (5) aufweist, die sich axial erstrecken und um den Zylinderumfang angeordnet sind.

6. Einrichtung nach Anspruch 5, **dadurch gekennzeichnet, dass** ein tangential vorgespanntes Spannband (6) zur Aufbringung des Dämpfermomentes vorgesehen ist.

7. Einrichtung nach Anspruch 5, **dadurch gekennzeichnet, dass** mehrere um den Umfang tangential angeordnete vorgespannte Zugstangen (9) zur Aufbringung des Dämpfermomentes vorgesehen sind.

8. Einrichtung nach Anspruch 1, **dadurch gekennzeichnet, dass** mehrere Ringe (11, 11', 11") vorgesehen sind, die an den axialen Stirnseiten Reibflächen (12, 12') aufweisen.

9. Einrichtung nach Anspruch 8, **dadurch gekennzeichnet, dass** die Ringe (11, 11', 11") einen Hohlzylinder (4) bilden.

10. Einrichtung nach Anspruch 8 oder 9, **dadurch gekennzeichnet, dass** mehrere axial vorgespannte Zugstangen (13) zur Aufbringung des Dämpfermomentes vorgesehen sind.

## Claims

1. Device to damp vibrations in a drive train, **characterized in that** a cylindrical shaft (2), preferably designed as a hollow shaft with flanges (3), is provided, which is disposed between the halves of a coupling and is firmly connected to these halves, and around which at least one ring (8, 11, 11', 11") with friction surfaces is arranged.

2. Device according to Claim 1, **characterized in that** the friction surfaces (12, 12') are disposed radially on the outside of at least one ring (8).

3. Device according to Claim 1 or 2, **characterized in that** a hollow cylinder (4, 4', 4") secured to one of the flanges (3) is disposed round the at least one ring (8).

4. Device according to Claim 3, **characterized in that** the hollow cylinder (4, 4', 4") is split.

5. Device according to Claim 3 or 4, **characterized in that** the hollow cylinder (4) or a section thereof (4', 4") has slots (5) extending in axial direction and arranged round the circumference of the cylinder.

6. Device according to Claim 5, **characterized in that** a tangentially pre-stressed tensioning strap (6) is provided to apply the damping torque.

7. Device according to Claim 5, **characterized in that** several pre-stressed tension rods (9) disposed tangentially around the circumference are provided in order to apply the damping moment.

8. Device according to Claim 1, **characterized in that** several rings (11, 11', 11") are provided that have fric tion surfaces (12, 12') on the axial face ends.

9. Device according to Claim 8, **characterized in that** the rings (11, 11', 11") form a hollow cylinder (4).

10. Device according to Claim 8 or 9, **characterized in that** several axially pre-stressed tension rods (13) are provided to apply the damping torque.

## Revendications

1. Dispositif d'amortissement de vibrations dans une chaîne cinématique, **caractérisé en ce qu'**un arbre cylindrique (2), de préférence étudié sous forme d'un arbre creux avec brides (3), est prévu, qui est disposé entre les deux moitiés d'un accouplement et lié rigidement à ces moitiés, et autour duquel est disposée au moins une bague (8, 11, 11', 11 ") à surfaces frottantes.

2. Dispositif selon la revendication 1 **caractérisé en ce que** les surfaces frottantes (12, 12') sont disposées radialement à l'extérieur de la au moins une bague (8).

3. Dispositif selon la revendication 1 ou 2, **caractérisé en ce qu'**autour de la au moins une bague (8) est disposé un cylindre creux (4, 4', 4"), qui est monté à une des brides (3).

4. Dispositif selon la revendication 3, **caractérisé en ce que** le cylindre creux (4, 4', 4") est segmenté.

5. Dispositif selon l'une des revendications 3 ou 4, **caractérisé en ce que** le cylindre creux (4) ou un de ses cylindres partiels (4', 4") comporte des fentes (5), qui s'étendent axialement et sont disposées autour de l'envergure du cylindre.

6. Dispositif selon la revendication 5, **caractérisé en ce qu'**une bande de serrage (6), qui est précontrainte tangentiellement, est prévue en vue de la mise en oeuvre du moment d'amortissement.

7. Dispositif selon la revendication 5, **caractérisé en ce que** plusieurs barres de traction (9) précontraintes, qui sont disposées tangentiellement, sont prévues en vue de la mise en oeuvre du moment d'amortissement.

8. Dispositif selon la revendication 1, **caractérisé en ce que** plusieurs bagues (11, 11', 11"), qui comportent des faces frottantes (12, 12') à leurs fronts axiaux, sont prévues.

9. Dispositif selon la revendication 8, **caractérisé en ce que** les bagues (11, 11', 11") forment un cylindre creux (4).

10. Dispositif selon l'une des revendications 8 ou 9, **caractérisé en ce que** plusieurs barres de traction (13), qui sont précontraintes axialement, sont prévues en vue de la mise en oeuvre du moment d'amortissement.
